# EUROPÄISCHE PATENTSCHRIFT

(11) **EP 1 468 491 B1**
(45) Veröffentlichungstag und Bekanntmachung des Hinweises auf die Patenterteilung: **04.05.2005**
(21) Anmeldenummer: 02795050.0
(22) Anmeldetag: 27.12.2002
(51) Int. Cl.: H03K 3/356

(54) **INTEGRIERTE SCHALTUNG UND VERFAHREN ZUM BETRIEB DER INTEGRIERTEN SCHALTUNG**
INTEGRATED CIRCUIT AND METHOD FOR OPERATING SAID INTEGRATED CIRCUIT
CIRCUIT INTEGRE ET PROCEDE POUR FAIRE FONCTIONNER LE CIRCUIT INTEGRE

(30) Priorität: 24.01.2002 DE 10202726
(43) Veröffentlichungstag der Anmeldung: 20.10.2004
(73) Patentinhaber: Infineon Technologies AG, 81669 München (DE)
(72) Erfinder: KÜNEMUND, Thomas, 80337 München (DE); WENZEL, Andreas, 81829 München (DE)
(74) Vertreter: Hermann, Uwe, Dipl.-Ing.
(86) Internationale Anmeldenummer: PCT/DE2002/004750
(87) Internationale Veröffentlichungsnummer: WO 2003/063354

(56) Entgegenhaltungen:
- EP-A- 1 115 094
- US-A- 4 555 777
- US-A- 5 481 500
- US-A- 5 825 224
- US-A- 6 084 455
- US-A- 6 107 853
- US-A1- 2001 004 220

## Beschreibung

Die Erfindung betrifft eine in Dual-Rail-Technologie aufgebaute integrierte Schaltung und ein Verfahren zum Betreiben derselben.

In jedem modernen Mikroprozessor oder- Controller treten während der schrittweisen Abarbeitung eines Algorithmus' Zustände auf, die eine vorübergehende Unterbrechung des Programmablaufs erforderlich machen. Ursache können beispielsweise noch nicht zur Verfügung stehende Instruktionen oder Daten sein. Die Unterbrechung sollte nach Möglichkeit derart erfolgen, daß die zum Zeitpunkt der Unterbrechung vorhandene Information beziehungsweise die vorhandenen Daten vollständig erhalten bleibt beziehungsweise bleiben. Die im Programmablauf erreichten Zustände - einschließlich schon berechneter Zwischenergebnisse - müssen also für jeden der aufeinanderfolgenden Schritte des Algorithmus derart "eingefroren" werden, daß der Programmablauf mit minimalem Verzug fortgesetzt werden kann, sobald die dazu erforderliche Information, nämlich die zuvor fehlende Instruktion oder das fehlende Datum, zur Verfügung steht.

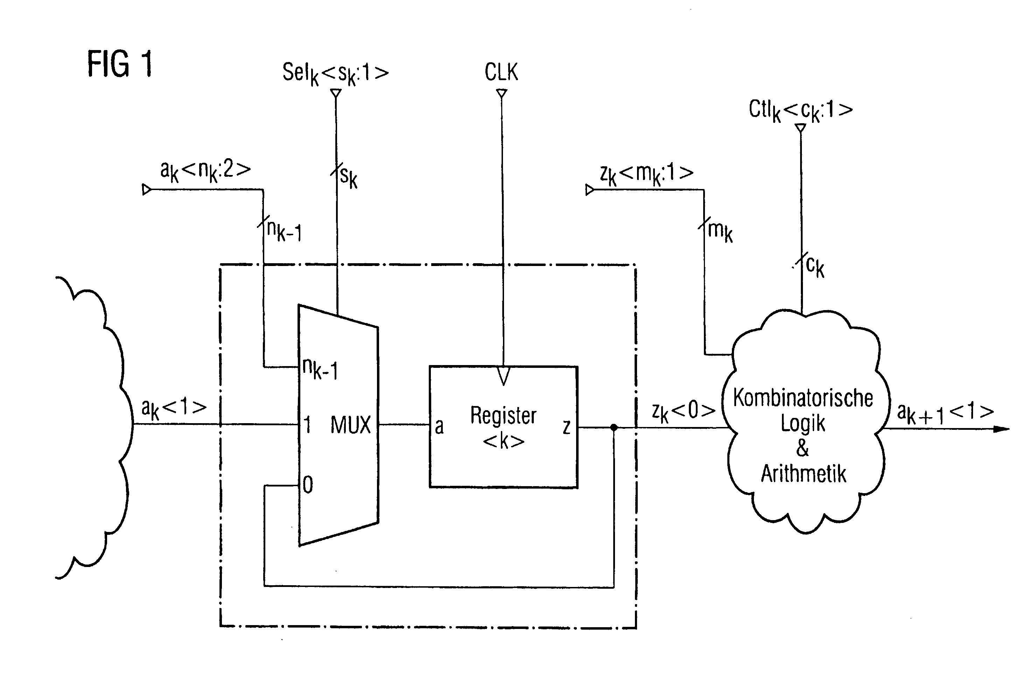

Eine schaltungstechnische, schematische Darstellung dieses Sachverhaltes ist in Figur 1 angegeben. Dabei ist nur ein Bit eines Datenpfades und nur ein Teilschritt (k) eines Programmablaufes dargestellt. Die den Teilschritten k = 1,2,... der Abarbeitung des Programms entsprechenden Zustände beziehungsweise Zwischenergebnisse zₖ werden entweder in arithmetisch-logischen Schaltungen aus z_{k - 1} sowie Steuersignalen ctlₖ berechnet (Datensignal aₖ<1>) oder von benachbarten Bits des Datenpfades übernommen beziehungsweise von außen zugeführt (aₖ<nₖ:2>)und danach in jeweils zugeordnete Register-Schaltungen, die jeweils über einen Takteingang verfügen, gespeichert. Das beschriebene "Einfrieren" der den Zuständen entsprechenden Registerinhalte zₖ wird über eine Rückkopplung realisiert, bei welcher der Datenausgang des Registers <k> mit den vor dem Eingang der Register liegenden Multiplexor-Schaltungen verbunden ist. Jede der Multiplexor-Schaltungen verfügt dabei über einen Steuereingang, an dem ein Steuersignal selₖ<sₖ : 1> anliegt. Die Kombination aus dem Multiplexor und dem Register ist in Figur 1 mit einer gestrichelten Linie umrandet.

Bei der in Figur 1 angegebenen schematischen Schaltung wird jedes Bit eines in den Registern gespeicherten Zustandes physikalisch durch genau einen elektrischen Knoten am Ausgang des Registers dargestellt. Für die deshalb sogenannte "Single-Rail"-Schaltungstechnik gilt dies auch für alle Knoten innerhalb der den Registern nachgeschalteten kombinatorischen Schaltnetzen (kombinatorische Logik und Arithmetik) zwischen den Registern sowie für die Registereingänge. Dem logischen Wert eines Zustands-Bits entspricht somit genau ein elektrischer Knoten.

Nachteil dieser Single-Rail-Technologie ist die Tatsache, daß der Schaltungsaufbau beziehungsweise die in der Schaltung verarbeiteten Signale auf einfache Weise ausspioniert werden können. Eine der wichtigsten Methoden zum Angriff auf Chipkarten und zur Beurteilung deren Empfindlichkeit bei Sicherheitsanwendungen ist die differentielle Stromprofil-Analyse (differential power analysis, DPA). Diese Methodik wird für gezielte Angriffe verwendet, um vertrauliche Informationen, wie zum Beispiel Paßwörter oder kryptographische Schlüssel, auszuspionieren.

Dabei werden für ein gegebenes Programm beziehungsweise für einen gegebenen Algorithmus mit statistischen Methoden gemessene Stromprofile der Chipkarte ausgewertet. Insbesondere werden über einen oder mehrere Taktzyklen berechnete Ladungsintegrale ausgewertet, wobei - für eine Vielzahl von Programmausführungen - aus der Korrelation von systematischer Datenvariation und jeweiligem Ladungsintegral Rückschlüsse auf die zu schützende Information gezogen werden können.

Hieraus folgt, daß die auf einer Chipkarte integrierten Schaltungen derart beschaffen sein sollten, daß sie unabhängig von den zu verarbeitenden Daten, das gleiche Stromprofil liefern, um eine differentielle Stromprofil-Analyse ins Leere laufen zu lassen.

Für die in Figur 1 angegebenen Single-Rail-Datenpfade ist dies jedoch sicher nicht der Fall. Wird der Programmablauf, wie oben beschrieben, unterbrochen, so werden die Registerausgänge über die vor den Eingängen liegenden Multiplexor-Schaltungen zurückgekoppelt. Hieraus erfolgt das erwünschte Einfrieren der Registerinhalte. Da jedoch keiner der im Datenpfad liegenden Registerknoten elektrisch umgeladen wird, ergibt sich für diesen Fall ein minimales Ladungsintegral.

Im Gegensatz dazu ändern sich im Fall eines nicht unterbrochenen Programmablaufes zumindest manche Registerinhalte im Laufe der Zeit beziehungsweise Taktzyklen. Das jeder Zustandsänderung jeweils zugeordnete Ladungsintegral ist daher eine Funktion derjenigen Knoten beziehungsweise elektrischen Kapazitäten, die elektrisch umgeladen werden. Somit besteht eine starke Abhängigkeit von den zeitlichen Änderungen der zu verarbeitenden Daten. Diese Aussage gilt nicht nur für die in Figur 1 gezeigten Registerknoten, sondern für alle Knoten innerhalb von Schaltnetzen zwischen den Registern.

Sich ändernde Ladungsintegrale können durch den Einsatz der sogenannten Dual-Rail-Technologie verhindert werden. Im Gegensatz zur herkömmlichen Single-Rail-Technologie, bei der jedes Bit innerhalb eines Daten- oder Signalpfades physikalisch durch genau einen elektrischen Knoten k eines Schaltnetzes oder Schaltwerkes dargestellt wird, wird bei der Realisierung mit Dual-Rail-Technologie jedes Bit durch zwei Knoten k und kq dargestellt, wobei dieses Bit einen gültigen logischen Wert aufweist, wenn k dem wahren logischen Wert b dieses Bits und kq dem komplementären Wert bn = not(b) entspricht.

Die gewünschte Invarianz der Ladungsintegrale wird nun dadurch erreicht, daß zwischen zwei Zustände mit gültigen logischen Werten (b,bn)= (1,0) oder (0,1) ein sogenannter Vorlade-Zustand (precharge) eingefügt ist. In diesem Vorlade-Zustand werden sowohl k als auch kq auf dasselbe elektrische Potential geladen, nehmen also logisch ungültige Werte (1,1) oder (0,0) an. Für den Vorlade-Zustand (1,1) könnte eine Zustandsfolge wie folgt aussehen:
(1,1), (0,1), (1,1), (1,0), (1,1), (1,0), (1,1), (0,1),...

Für jede beliebige solcher Zustandsfolgen gilt, daß bei jedem Übergang (1,1) nach (b,bn) genau ein Knoten von 1 nach 0 umgeladen wird und für alle Zustände (b,bn) nach (1,1) genau ein Knoten von 0 nach 1 umgeladen wird. Dies gilt unabhängig vom logisch gültigen Wert b eines jeweiligen Zustands-Bits. Natürlich gilt Analoges auch für Zustandsfolgen mit dem Vorlade-Zustand (0,0).

Hieraus folgt, daß die diesen Zustandsfolgen entsprechenden Ladungsintegrale unabhängig von der Abfolge (b,bn) der logisch gültigen Werte sind. Es muß lediglich Sorge dafür getragen werden, daß die Knoten k und kq gleiche elektrische Kapazitäten aufweisen. Das Stromprofil eines derart implementierten Datenpfades hängt somit nicht mehr ab von zeitlichen Variationen der zu verarbeitenden Daten. Eine in Dual-Rail-Technologie aufgebaute Schaltung ist somit resistent gegen eine differentielle Stromprofil-Analyse.

Die Aufgabe der vorliegenden Erfindung besteht deshalb darin, ein Datenpfad-Register zu schaffen, welches die Möglichkeit des "Einfrierens" ihrer Inhalte bietet und gleichzeitig einen Schutz vor der differentiellen Stromprofil-Analyse aufweist.

Diese Aufgabe wird durch eine integrierte Schaltung mit den Merkmalen des Patentanspruches 1 gelöst. Vorteilhafte Ausgestaltungen ergeben sich aus den abhängigen Ansprüchen.

Die Erfindung schlägt eine integrierte Schaltung mit folgenden Merkmalen vor:
- zwei erste Anschlüsse, an die ein Dual-Rail-Signal anlegbar ist,
- einer mit den ersten Anschlüssen verbundenen ersten Speicherzelle, die das an den ersten Anschlüssen anliegende Signal zwischenspeichert,
- einem ersten Mittel zum Vorladen von mit den ersten Anschlüssen verbundenen ersten Leitungen,
- einer ersten Datenübertragungseinrichtung, die das in der ersten Speicherzelle gespeicherte Dual-Rail-Signal an zweite Anschlüsse weitergibt, die mit einer zweiten Speicherzelle verbunden sind, welche dieses Signal über eine zweite Datenübertragungseinrichtung wieder an die ersten Anschlüsse übertragen kann und
- einem zweiten Mittel zum Vorladen von den mit den zweiten Anschlüssen verbundenen zweiten Leitungen.

Die integrierte Schaltung ermöglicht das "Einfrieren" des an den ersten Anschlüssen anliegenden Datensignales, indem dieses von der ersten Speicherzelle in die zweite Speicherzelle übertragen wird. Wie aus der späteren Beschreibung deutlich werden wird, erfolgt diese Datenübertragung in periodischen Abständen. Dies bedeutet, jedes an den ersten Anschlüssen anliegende Datensignal wird von der ersten in die zweite Speicherzelle übertragen. Die integrierte Schaltung sieht nun eine Möglichkeit vor, die in der zweiten Speicherzelle zwischengespeicherten Daten bei Bedarf an die erste Speicherzelle beziehungsweise die ersten Anschlüsse zurückzugeben, so daß dieses an den ersten Anschlüssen von einer anderen Schaltung abgreifbar ist.

Die integrierte Schaltung ist in der eingangs beschriebenen Dual-Rail-Technologie realisiert. Dies bedeutet, die Information eines jeden Bits wird über zwei Leitungen übertragen. Die erste und die zweite Speicherzelle sind deshalb derart beschaffen, daß sie jeweils die Information des logisch gültigen Wertes und des komplementären Wertes speichern können. Um die gewünschte Ladungsneutralität zu erhalten, sind sowohl die Leitungen, die den ersten Anschlüssen zugeordnet sind, als auch die Leitungen, die den zweiten Anschlüssen zugeordnet sind und welche das Datensignal der zweiten Speicherzelle transportieren, mit Mitteln verbunden, welche eine Vorladung der jeweiligen Leitung übernehmen. Je nachdem, ob die Mittel zum Vorladen der Leitungen mit einem Versorgungspotential oder einem Bezugspotential verbunden sind, wird ein Vorlade-Zustand von (1,1) oder (0,0) erreicht.

Die integrierte Schaltung ermöglicht somit ein Datenpfad-Register, bei dem die Möglichkeit des "Einfrierens" ihrer Inhalte besteht. Dabei ist sichergestellt, daß unabhängig von zeitlichen Variationen der zu verarbeitenden Daten keine unterschiedlichen Ladungsintegrale auftreten können.

In einer bevorzugten Ausgestaltung der integrierten Schaltung sind die erste und die zweite Speicherzelle als gegeneinander verschaltete Inverter ausgeführt. Speicherzellen in dieser Verschaltung weisen einen besonders einfachen Aufbau auf und sind mit wenigen Bauelementen realisierbar.

Bevorzugt sind die erste und die zweite Speicherzelle jeweils über einen Auswahltransistor mit einem Versorgungspotential-Anschluß gekoppelt, an dessen Steueranschlüssen jeweils ein Taktsignal anliegt. Dabei wird bei einem ersten logischen Wert des Taktsignals die erste Speicherzelle mit einem Dual-Rail-Signal beschrieben, während die zweite Speicherzelle das in sie geschriebene Dual-Rail-Signal hält, während bei einem zweiten logischen Wert des Taktsignales die zweite Speicherzelle mit einem Dual-Rail-Signal beschrieben wird, während die erste Speicherzelle das in sie geschriebene Dual-Rail-Signal hält. Diese Ausgestaltung ermöglicht die periodische Übertragung des in der ersten Speicherzelle gespeicherten Signales an die zweite Speicherzelle.

In einer weiteren bevorzugten Variante besteht das erste Mittel zum Vorladen von mit den ersten Anschlüssen verbundenen ersten Leitungen aus zwei Schaltelementen, die zwischen einer Versorgungspotential-Leitung und einer jeweiligen ersten Leitung verschaltet sind. In entsprechender Weise ist vorgesehen, das zweite Mittel zum Vorladen von mit den zweiten Anschlüssen verbundenen zweiten Leitungen ebenfalls aus zwei Schaltelementen auszuführen, die zwischen einer Versorgungspotential-Leitung und einer jeweiligen zweiten Leitung verschaltet sind. Die Schaltelemente des ersten und zweiten Mittels werden dabei periodisch aktiviert, wobei die Aktivierung vom Zustand des an den Speicherzellen angelegten Taktsignales abhängig ist.

In einer weiteren vorteilhaften Ausgestaltung weist die erste Datenübertragungseinrichtung zwei Schaltelemente auf, deren Steueranschlüsse jeweils mit einem der ersten Anschlüsse verbunden sind. Weiterhin ist ein Auswahltransistor vorgesehen, der zwischen einer versorgungspotential-Leitung und einem jeweiligen Hauptanschluß der zwei Schaltelemente verschaltet ist, wobei der jeweils andere Hauptanschluß der Schaltelemente mit einem der zweiten Anschlüsse verbunden ist.

In entsprechender Weise weist die zweite Datenübertragungseinrichtung zwei Schaltelemente auf, deren Steueranschlüsse jeweils mit einem der zweiten Anschlüsse verbunden sind. Weiterhin ist ein Auswahltransistor vorgesehen, der zwischen einer Versorgungspotential-Leitung und einem jeweiligen Hauptanschluß der zwei Schaltelemente verschaltet ist, wobei der jeweils andere Hauptanschluß der zwei Schaltelemente mit einem der ersten Anschlüsse verbunden ist.

Die Aktivierung des Auswahltransistors der ersten Datenübertragungseinrichtung, welche eine Datenübertragung von den ersten zu den zweiten Leitungen übernimmt, erfolgt in periodischen Zeitabständen. Der Zeitpunkt, zu welchem der Auswahltransistor und somit die Datenübertragungseinheit aktiv wird, ist abhängig vom Zustand des Taktsignales. Die Aktivierung der zweiten Datenübertragungseinrichtung, welche eine Rückübertragung eines Datenwertes von der zweiten in die erste Speicherzelle übernimmt, wird durch eine von der erfindungsgemäßen integrierten Schaltung unabhängige Steuervorrichtung bewerkstelligt. Die Steuervorrichtung kann zusammen mit der erfindungsgemäßen integrierten Schaltung im gleichen Substrat ausgebildet sein. Die Steuervorrichtung könnte jedoch auch in Form eines externen Bausteines vorliegen, welcher jeweilige Anschlüsse mit den notwendigen Signalen beaufschlagt.

In einer weiteren vorteilhaften Ausgestaltung ist vorgesehen, daß die ersten Anschlüsse einen Datenausgang bildende Ausgangsanschlüsse sind, die über eine Schaltungsanordnung mit einem zumindest zwei Eingangsanschlüsse umfassenden Dateneingang, an den ein Dual-Rail-Signal anlegbar ist, verbunden sind. Die Schaltungsanordnung gibt in Abhängigkeit eines Auswahlsignales das an den Eingangsanschlüssen anliegende Dual-Rail-Signal an die Ausgangsanschlüsse weiter. Der Dateneingang kann vorteilhafterweise als Multiplexor ausgeführt sein.

Im einfachsten Fall weist die integrierte Schaltung nur einen Datenpfad auf. Die integrierte Schaltung verfügt in diesem Fall lediglich über zwei Eingangsanschlüsse, die über besagte Schaltungsanordnung mit den ersten Anschlüssen verbunden sind. Der Dateneingang muß in diesem Fall auch nicht als Multiplexor ausgeführt sein.

Verfügt die integrierte Schaltung hingegen über eine Mehrzahl an Datenpfaden, so sind für jedes Bit (also für jeden Datenpfad) zwei Eingangsanschlüsse und jeweils eine diesen Eingangsanschlüssen zugeordnete Schaltungsanordnung vorgesehen. Jede dieser Schaltungsanordnungen ist dann mit den ersten Anschlüssen der integrierten Schaltung verbunden. Es wird jedoch lediglich ein Datenpfad mit den ersten Anschlüssen über ein Auswahlsignal verbunden. Welcher Datenpfad mit den ersten Anschlüssen in Verbindung gebracht wird, wird durch Anlegen eines Auswahlsignales an die betreffende Schaltungsanordnung gesteuert. Die Ansteuerung beziehungsweise das Anlegen des Auswahlsignales kann wiederum durch eine nicht in der erfindungsgemäßen integrierten Schaltung vorhandene Steuervorrichtung vorgenommen werden. Die Gesamtheit der Eingangsanschlüsse und der jeweils zugeordneten Schaltungsanordnung zusammen mit den zugeordneten Auswahlmitteln wird als Multiplexor bezeichnet.

Das Verfahren zum Betreiben der erfindungsgemäßen integrierten Schaltung umfaßt folgende Schritte:
- die Auswahltransistoren der ersten und zweiten Speicherzelle werden mit einem Taktsignal beaufschlagt,
- das erste Mittel zum Vorladen der ersten Leitungen wird infolge einer fallenden Taktflanke aktiviert,
- das zweite Mittel zum Vorladen der zweiten Leitungen wird infolge einer steigenden Taktflanke aktiviert,
- die erste Datenübertragungseinheit wird nach der Deaktivierung des zweiten Mittels zum Vorladen der zweiten Leitungen akvitiert, wodurch das an den ersten Anschlüssen anliegende Dual-Rail-Signal an die zweite Speicherzelle übertragen wird,
- die zweite Datenübertragungseinheit wird aktiviert, wenn das in der zweiten Speicherzelle gespeicherte Dual-Rail-Signal an den ersten Ausgangsanschlüssen zur Verfügung stehen soll.

Insbesondere erfolgt die Aktivierung des ersten und zweiten Mittels zum Vorladen jeweiliger Leitungen durch Ansteuerung der jeweiligen Schaltelemente.Die Aktivierung der ersten und zweiten Datenübertragungseinheiten erfolgt durch Ansteuern eines jeweiligen Auswahltransistors.

In einer bevorzugten Ausführung erfolgt das Ansteuern der Schaltelemente und Auswahltransistoren mittels einer Steuerschaltung, die nicht Bestandteil der erfindungsgemäßen integrierten Schaltung zu sein braucht. Die Steuerschaltung könnte vielmehr in einem anderen Substrat ausgebildet sein oder sogar einen eigenen Baustein darstellen.

Die Erfindung und deren Funktionsweise wird nachfolgend anhand der Figuren näher erläutert. Es zeigen:
Figur 1 eine schematische Darstellung eines Datenpfad-Registers in Single-Rail-Technologie,
Figur 2a ein erstes Ausführungsbeispiel der erfindungsgemäßen integrierten Schaltung,
Figur 2b das zeitliche Verhalten der Daten- und Steuersignale der Schaltung aus Figur 2a,
Figur 3a ein zweites Ausführungsbeispiel der erfindungsgemäßen integrierten Schaltung,
Figur 3b das zeitliche Verhalten der Daten- und Steuersignale der Schaltung aus Figur 3a,
Figur 4a ein drittes Ausführungsbeispiel der erfindungsgemäßen Schaltung,
Figur 4b das zeitliche Verhalten der Daten- und Steuersignale der Schaltung aus Figur 4a,
Figur 5a ein viertes Ausführungsbeispiel einer erfindungsgemäßen integrierten Schaltung und
Figur 5b das zeitliche Verhalten der Daten- und Steuersignale der Schaltung aus Figur 5a.

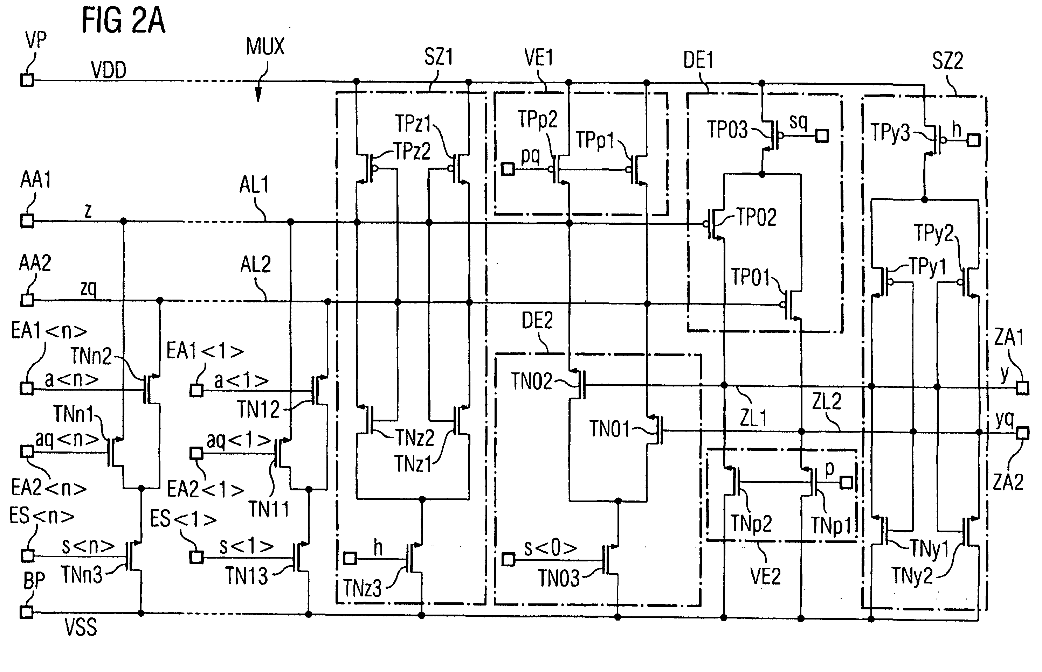

Die Figuren 2a, 3a, 4a und 5a zeigen Ausführungsbeispiele der erfindungsgemäßen integrierten Schaltung. Dargestellt ist jeweils die in Figur 1 gestrichelt umrandete Kombination des Multiplexors MUX und des Registers <k>. In allen Ausführungsbeispielen sind gleiche Elemente mit gleichen Bezugszeichen bezeichnet. Die bei jeweiligen Transistoren stehenden Bezugszeichen TP, TN bezeichnen P-Kanal-Transistoren beziehungsweise N-Kanal-Transistoren. Die Bezeichnung <1>,... <n> bezeichnet jeweils einen Datenpfad. Der in spitzen Klammern angegebene Wert steht stellvertretend für das j-te Bit, wobei j = 1... n.

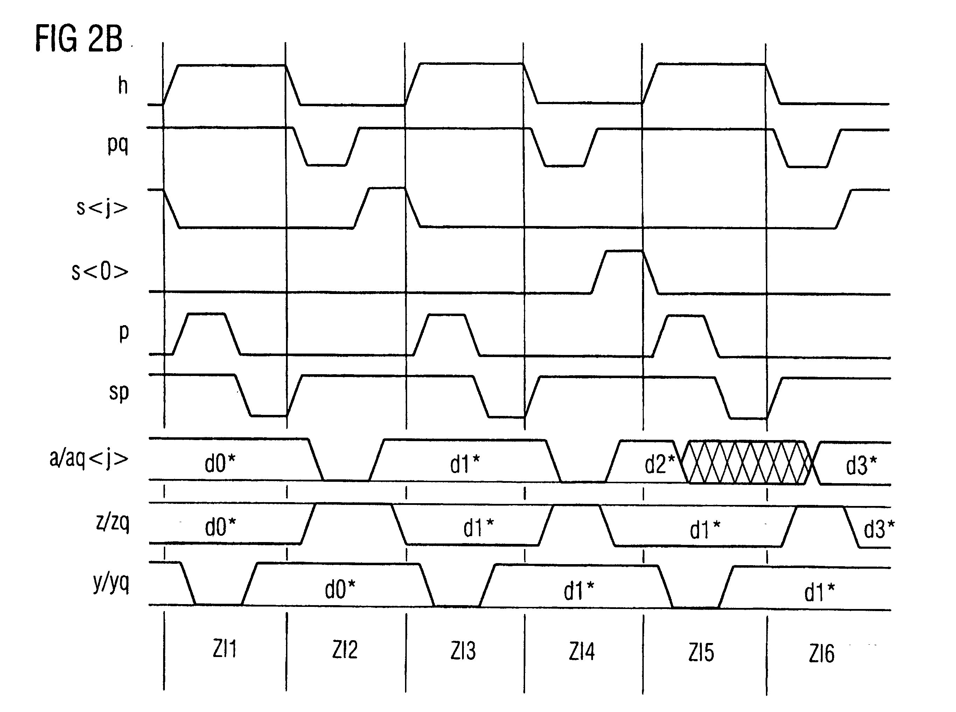

Bei der nachfolgenden Beschreibung wird auf die Figur 2a Bezug genommen, die zusammen mit dem in Figur 2b angegebenen zeitlichen Verhalten der Daten- und Steuersignale erläutert wird.

Die integrierte Schaltung weist Eingangsanschlüsse EAl<j>, EA2<j> auf, wobei j = 1... n. Für jedes Bit beziehungsweise jeden Datenpfad sind zwei Eingangsanschlüsse EA1<j>, EA2<j> vorgesehen. Am Eingangsanschluß EA1 liegt das logisch gültige Signal a<n> an, während am Eingangsanschluß EA2 das komplementäre Signal aq<j> anlegbar ist. Die Eingangsanschlüsse EA1<j> und EA2 <j> sind jeweils mit Steueranschlüssen von Transistoren TNj2, TNj1 verbunden. Zusammen mit einem Auswahltransistor TNj3, an dessen Eingangsanschluß ES<j> ein Auswahlsignal s<j> anlegbar ist, bilden diese eine Schaltungsanordnung, welche die Eingangssignale a<j>, aq<j> an erste Leitungen AL1, AL2 gibt. Die Auswahltransistoren TNj3 sind zwischen einem Bezugspotentialanschluß BP und den jeweiligen Source-Anschlüssen der Transistoren TNj1, TNj2 verschaltet. Die Ausgabe der Signale erfolgt nur dann, wenn der Transistor TNj3 leitend geschaltet ist. Da die Anordnung einen Multiplexor bildet, kann immer nur einer der n Transistoren TNj3 leitend geschaltet werden. An den übrigen Transistoren liegt ein Signal an, welches diese nicht-leitend schaltet.

Die ersten Leitungen bzw. Ausgangsleitungen AL1, AL2 sind mit ersten Anschlüssen AA1, AA2 verbunden, an welchen das von den Eingangsanschlüssen EA1<j>, EA2<j> angelegte Eingangssignal a<j>, aq<j> abgreifbar ist. Dieses an den ersten Anschlüssen bzw. den Ausgangsanschlüssen AA1, AA2 abgreifbare Dual-Rail-Signal wird mit z, zq bezeichnet.

Mit den ersten Anschlüssen AA1, AA2 ist eine Speicherzelle SZ1 verbunden. Die Speicherzelle SZ1 besteht aus zwei gegeneinander geschalteten Invertern. Der erste Inverter wird durch die Transistoren TNz2, TPz2 gebildet. Der zweite Invertor wird durch die Transistoren TPz1, TNz1 gebildet. Die Speicherzelle SZ1 weist darüber hinaus einen Auswahltransistor TNz3 auf, an dessen Steueranschluß ein Taktsignal h anlegbar ist. Der Auswahltransistor TNz3 ist zwischen den Bezugspotentialanschluß BP und die Inverter geschalten. Die Ausgänge der Inverter sind mit den ersten Leitungen AL1, AL2 verbunden.

Weist das Taktsignal h den logischen Wert 0 auf, so wird der an den ersten Leitungen AL1, AL2 anliegende Wert in die Speicherzelle SZ1 geschrieben. Wechselt das Taktsignal von logisch 0 auf logisch 1, so wird der Wert in der Speicherzelle SZ1 gehalten, da die Inverter durch den eingeschalteten Auswahltransistor TNz3 mit Bezugspotential verbunden werden.

Entsprechend dem Dual-Rail-Prinzip werden die ersten Leitungen AL1, AL2 nach einem logisch gültigen Zustand in einen Vorlade-Zustand gebracht, in dem die ersten Leitungen AL1, AL2 mit dem gleichen Potential beaufschlagt werden. In der vorliegenden integrierten Schaltung wird dies durch das Mittel VE1 bewerkstelligt, das als Vorladeeinrichtung bezeichnet werden kann. Die Vorladung der ersten und zweiten Leitung AL1, AL2 wird angestossen, sobald das Taktsignal h seinen Wert von logisch 1 nach logisch 0 ändert. Das Mittel VE1 besteht aus zwei Transistoren TPp1, TPp2, die jeweils mit dem gleichen Steuersignal pq beaufschlagt werden. Das Steuersignal pq ist ein periodisches Signal, das in fester Kopplung zum Taktsignal h steht. Die Transistoren TPP1, TPP2 des Mittels VE1 sind zwischen einem Versorgungspotentialanschluß VP unter den ersten Leitungen AL1, AL2 verschaltet. Die ersten Leitungen AL1, AL2 nehmen somit in ihrem Vorlade-Zustand den Wert (1,1) an.

Eine Datenübertragungseinrichtung DE1, bestehend aus den Transistoren TP01, TP02 und dem Auswahltransistor TP03 überträgt die auf den ersten Leitungen AL1, AL2 anliegenden Signale an zweite Leitungen ZL1, ZL2. Zu diesem Zweck muß die Datenübertragungseinrichtung DE1 über den Auswahltransistor TP03 aktiv geschaltet sein. Das an dem Auswahltransistor TP03 anliegende Auswahlsignal sq läuft synchron zu dem Taktsignal h, so daß eine periodische Datenübertragung stattfindet. Die Daten werden dadurch von der ersten Speicherzelle SZ1 in eine zweite Speicherzelle SZ2 übertragen.

Die zweite Speicherzelle SZ2 besteht ebenfalls aus gegeneinander geschalteten Invertern. Der erste Inverter ist durch die Transistoren TPy1, TNy1 gebildet. Der zweite Inverter wird durch die Transistoren TPy2, TNy2 gebildet. Der Ausgang der Inverter ist mit den zweiten Leitungen ZL1, ZL2 verbunden.

Eine Zwischenspeicherung in der zweiten Speicherzelle SZ2 erfolgt nur dann, wenn diese über einen Auswahltransistor TPy3, an welchem das Taktsignal h anliegt, aktiv geschaltet ist. Der Auswahltransistor TPy3 ist vorliegend zwischen dem Versorgungspotential-Anschluß VP und den gegengeschalteten Invertern gelegen.

Um auch auf den zweiten Leitungen ZL1, ZL2 die erwünschte Ladungsneutralität zu erreichen, ist auch den zweiten Leitungen ZL1, ZL2 ein Mittel VE2 zum Vorladen dieser Leitungen zugeordnet, das ebenfalls als Vorladeeinrichtung bezeichnet werden kann. Das Mittel VE2 weist die Transistoren TNp1, TNp2 auf, die jeweils mit dem gleichen Steuersignal p beaufschlagt werden. Das Mittel VE2 ist zwischen den zweiten Leitungen ZL1, ZL2 und dem Bezugspotentialanschluß BP verschaltet.

Wie eingangs bereits erläutert, treten in modernen Prozessoren während der schrittweisen Abarbeitung eines Algorithmus Zustände auf, die eine vorübergehende Unterbrechung des Programmablaufes erforderlich machen. Die zum Zeitpunkt der Unterbrechung vorhandene Information sollte dabei vollständig erhalten bleiben. Zu diesem Zweck dient die zweite Speicherzelle SZ2. Diese sorgt dafür, daß die im Programmfluß erreichten Zustände eingefroren werden können. Kann der Programmablauf fortgesetzt werden, so können die in der zweiten Speicherzelle SZ2 gespeicherten Daten über die zweite Datenübertragungseinrichtung DE2, welche zwischen dem Ausgang der zweiten Speicherzelle SZ2 und den ersten Leitungen AL1, AL2 verschaltet ist, wieder auf die ersten Anschlüsse AA1, AA2 übertragen werden.

Der Aufbau der zweiten Datenübertragungseinrichtung DE2 ähnelt im Prinzip dem der ersten Datenübertragungseinrichtung DE1. Ein Auswahltransistor TN03, an den ein Steuersignal s<0> anlegbar ist, ist zwischen dem Bezugspotentialanschluß BP und zwei Schaltelementen TN01, TL02 verschaltet. Die Steueranschlüsse der Transistoren TN01, TN02 sind mit den zweiten Leitungen ZL1, ZL2, verbunden. Die Drain-Anschlüsse der Transistoren TN01, TN02 weisen eine jeweilige Verbindung zu den ersten Leitungen AL1, AL2 auf.

Das Einfrieren des Inhalts eines Datenpfad-Registers findet folglich über eine Rückkopplung statt. Dabei wird das an den ersten Anschlüssen - den Ausgangsanschlüssen - anliegende Datensignal grundsätzlich in einer zweiten Speicherzelle zwischengespeichert. Der in der zweiten Speicherzelle SZ2 gespeicherte Wert kann zu einem beliebigen Zeitpunkt über die zweite Datenübertragungseinrichtung DE2 an die ersten Anschlüsse rückgekoppelt werden.

Nachfolgend wird anhand der Figur 2b die Funktionsweise der integrierten Schaltung genauer erklärt. Der Verlauf der Daten- und Steuersignale ist in sechs Zeitintervalle ZI1 bis ZI6 unterteilt. Die Signale h (Taktsignal), pq, s<j>, s<0>, p und sq bezeichnen Steuersignale, die an jeweiligen aus Figur 2a ersichtlichen Schaltungsblöcken angelegt werden. Die Steuersignale können von einer Steuervorrichtung erzeugt sein. Die Steuervorrichtung muß dabei nicht Bestandteil der erfindungsgemäßen integrierten Schaltung sein. Mit a/aq<j>, z/zq und y/yq sind die an den Eingangsanschlüssen, den ersten und zweiten Anschlüssen anliegenden Datensignale bezeichnet.

Für das erste angegebenen Zeitintervall ZI1 gilt zunächst, daß mit h = 1 ein zuvor über einen der Multiplexor-Eingänge (EA1<j>, EA2<j>) an die ersten Anschlüsse AA1, AA2 übertragener Wert (z, zq) = (d0, d0q) = d0* durch die Speicherzelle SZ1 gehalten wird. Voraussetzung hierfür ist, daß das Steuersignal pq, das dem Mittel zum Vorladen der Ausgangsleitungen AL1, AL2 zuzuordnen ist, den logischen Wert 1 hat und alle Steuersignale s<j>, wobei j = 1, ... n, sowie s<0> den logischen Wert 0 aufweisen. Somit sind weder das Mittel zum Vorladen der Ausgangsleitungen VE1 noch die Multiplexoreingänge ES<j> aktiv.

Zu Beginn des Zeitintervalles ZI1 werden die zweiten Leitungen ZL1, ZL2 über die zweite Vorladeeinheit VE2 (Steuersignal p = 1) auf den Wert (0,0) vorgeladen. Nachdem das Steuersignal p seinen Wert angenommen hat und gleichzeitig mit dessen fallender Flanke das Steuersignal sq den logischen Wert 0 erreicht, wird der Wert d0* über die erste Datenübertragungseinheit DE1 nach (y, yq) geschrieben. Im folgenden Zeitintervall ZI2 wird dieser Wert, der nunmehr in der zweiten Speicherzelle SZ2 abgespeichert ist, mit sq = 1, p = 0 und h = 0 gehalten.

Gleichzeitig werden mit dem Beginn des Zeitintervalls ZI2 die ersten Leitungen AL1, AL2 über pq = 0 auf (z, zq) = (1,1) vorgeladen. Anschließend wird mit pq = 1 und s<j> = 1 der inzwischen an den Eingangsanschlüssen EA1<j>, EA2<j> anliegende Wert d1* = (a<j>, aq<j>) = (d1, d1q), nach (z, zq) geschrieben.

Da die integrierte Schaltung in Dual-Rail-Technologie realisiert ist, verfügen auch die mit den Eingangsanschlüssen EA1, EA2 verbundenen Eingangsleitungen über eine Vorladeeinheit. Damit gibt es für das zeitliche Verhalten des Eingangssignales (a<j>, aq<j>)zwei mögliche Alternativen, von denen die erste im Zeitintervall ZI2 und die zweite Alternative im Zeitintervall ZI6 dargestellt ist.

Bevor einer der Multiplexoreingänge j mit dem Steuersignal s<j> = 1 geöffnet wird, (das heißt solange s<j> = 0) werden die mit den Eingangsanschlüssen EA1, EA2 verbundenen Eingangsleitungen, die vor dem Eingang des Registers liegen (aus Figur 2a nicht ersichtlich) auf einen Wert (0,0) vorgeladen. Die Eingangssignale (a<j>, aq<j>) erhalten den gültigen logischen Wert d1* somit entweder bevor oder nachdem der Multiplexoreingang aktiviert wurde.

In der zweiten Alternative werden die mit den Eingangsanschlüssen EA1, EA2 verbundenen Eingangsleitungen nicht vorgeladen. Die Eingangsignale (a<j>, aq<j>) müssen in dieser Variante jedoch den gültigen logischen Wert (hier d3*) stabil erreicht haben, bevor einer der Multiplexoreingänge ES<j> mit s<j> = 1 geöffnet wird.

Das Zeitintervall ZI3 entspricht dem Zeitintervall ZI1. Solange das Taktsignal h den logischen Wert 1 aufweist, wird der Wert d1* in der ersten Speicherzelle SZ1 der Wert (z/zq) gehalten. Die zweite Speicherzelle SZ2 wird, wie oben beschrieben, mit dem Wert d1* beschrieben.

Das Zeitintervall ZI4 entspricht dem Zeitintervall ZI2. Solange das Taktsignal h den logischen Wert 0 aufweist, wird der Wert d1* in der zweiten Speicherzelle SZ2 gehalten, das heißt d1* = (y, yq). Da das Steuersignal sq infolge der fallenden Taktflanke h seinen logischen Wert auf 0 wechselt, werden die mit den ersten Anschlüssen AA1, AA2 verbundenen Ausgangsleitungen AL1, AL2 auf (z, zq) = (1,1) vorgeladen. Nachdem die erste Vorladeeinheit VE1 durch sq = 1 wieder inaktiv geschaltet ist, kann an die ersten Anschlüsse AA1, AA2 ein neues Signal angelegt werden.

Im Gegensatz zum Zeitintervall ZI2 wird nun nicht einer der Multiplexoreingänge EA1, EA2 aktiv geschaltet, sondern die zweite Datenübertragungseinheit DE2 über das Auswahlsignal s<0>. Somit wird durch die Datenübertragungseinheit DE2 der Wert d1* an die Ausgangsanschlüsse AA1, AA2 übertragen, was bedeutet (z, zq) = d1*.

Im Zeitintervall ZI4 ist somit der Fall einer Datenrückkopplung dargestellt. Das Datum d1* ist somit eingefroren. Dies bedeutet, der zunächst im Zeitintervall ZI2 von der ersten Speicherzelle SZ1 an die zweite Speicherzelle SZ2 übertragene Wert d1* wird im Zeitintervall ZI4 wieder in die erste Speicherzelle SZ1 zurückgeschrieben. Da zwischen je zwei Schreibvorgängen von (z, zq) beziehungsweise (y, yq) die Knotenpaare, das heißt jeweilige Leitungen AL1, AL2 beziehungsweise ZL1, ZL2 auf (1,1) beziehungsweise (0,0) vorgeladen werden, sind die Ladungsintegrale nicht nur unabhängig von den Datenwechseln am Dateneingang, sondern auch unabhängig davon, ob neue Daten vom Dateneingang in die erste Speicherzelle SZ1 übernommen werden oder von der zweiten Speicherzelle SZ2 in die erste Speicherzelle SZ1 rückgekoppelt werden. Dieser Sachverhalt gilt jedoch nur für den in den Zeitintervallen ZI2 und ZI4 dargestellten Fall, daß die mit den Eingangsanschlüssen EA1<j>, EA2<j> auf den Wert (0,0) vorgeladen wurden, bevor sie ihren gültigen logischen Wert annehmen. Bei dem im Zeitintervall ZI6 dargestellten Fall ist das Ladungsintegral von den Datenwechseln von der ersten Speicherzelle SZ1 in die zweite Speicherzelle SZ2 unabhängig, nicht jedoch von Datenwechseln an den Eingangsanschlüssen EA1<j>, EA2<j>.

In der in Figur 2a dargestellten Variante der erfindungsgemäßen integrierten Schalten sind die für das Datensignal (y, yq) "zuständigen" Transistor-Gruppen der zweiten Speicherzelle SZ2, der zweiten Vorladeeinrichtung VE2 und der zweiten Datenübertragungseinrichtung DE2 komplementär zu den Transistorgruppen, die das Datensignal (z, zq) betreffen. Komplementär bedeutet hierbei die Vertauschung von N- und P-Kanal-Transistoren.

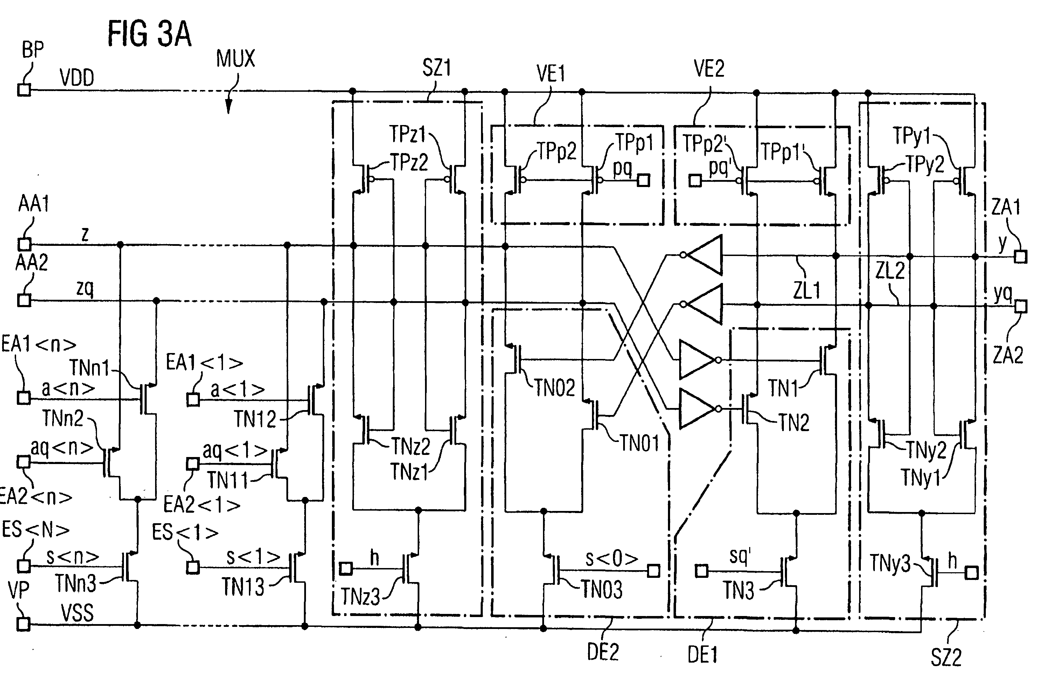

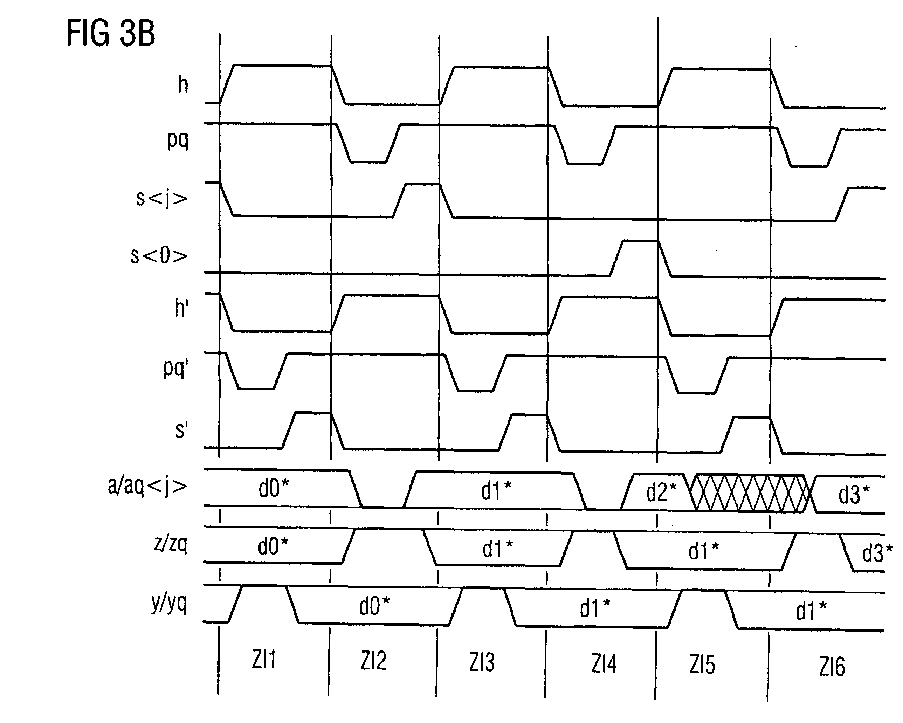

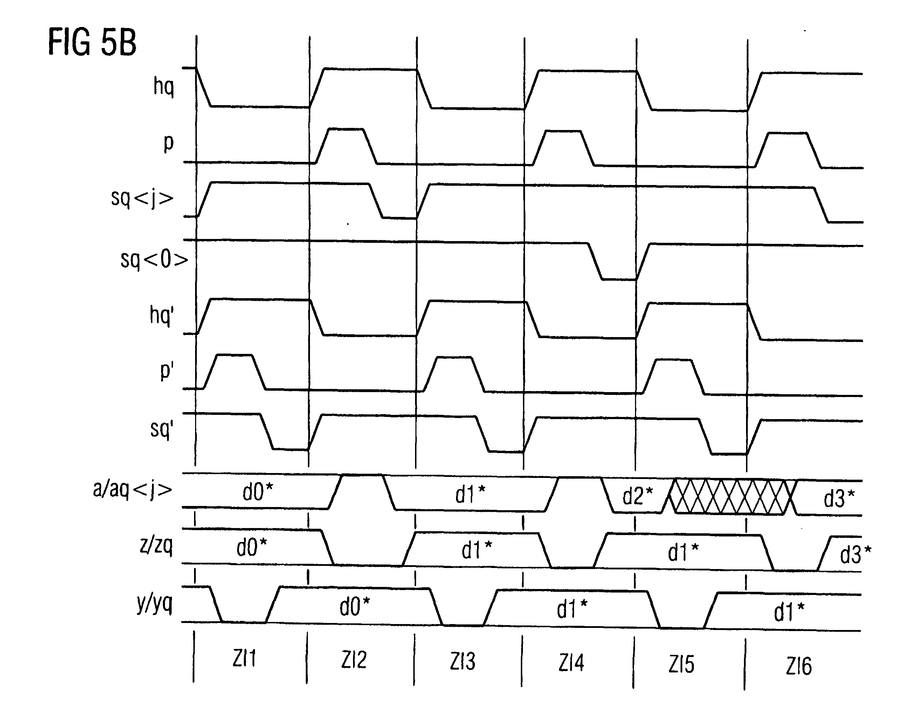

In den Figuren 3a,b bis 5a,b sind drei weitere Ausführungsbeispiele der erfindungsgemäßen integrierten Schaltung zusammen mit dem zeitlichen Verhalten der Daten- und Steuersignale dargestellt.

Für die in Figur 3a dargestellte Variante gilt, daß die für das Datensignal (z, zq) betreffenden Transistorgruppen mit denen von Figur 2a übereinstimmen, während die für das Datensignal (y, yq) zuständigen Transistorgruppen nicht aus komplementären Bauelementen aufgebaut sind. Dazu sind jedoch jeweils zwei Inverter zu der ersten und zweiten Datenübertragungseinrichtung DE1, DE2 sowie andere Steuerelemente notwendig, die aus Figur 3b hervorgehen.

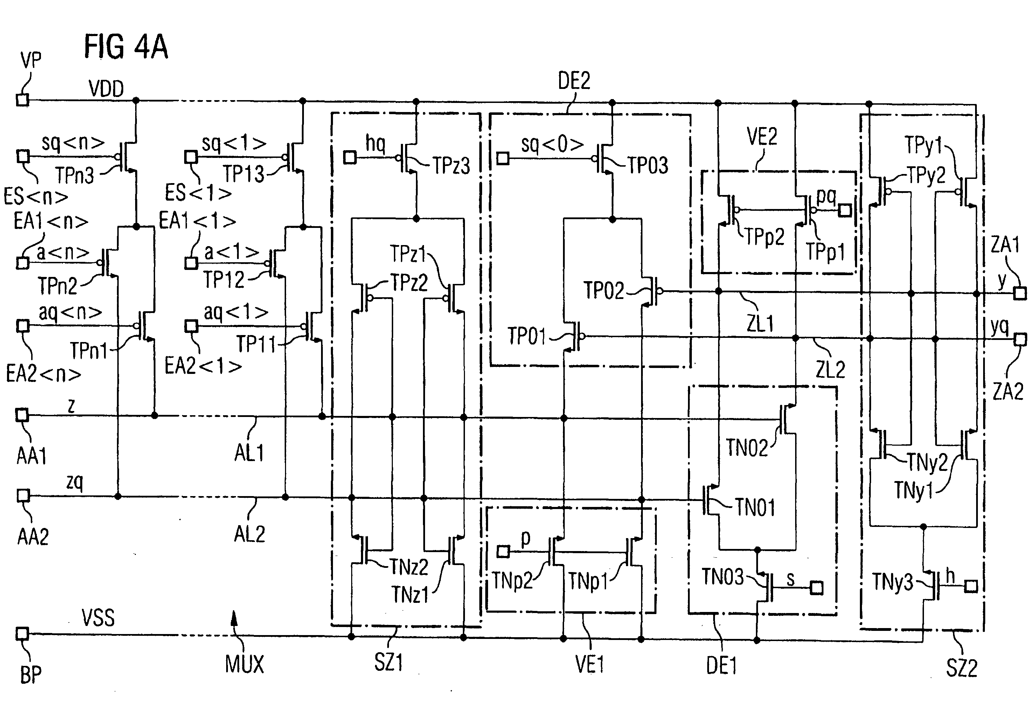

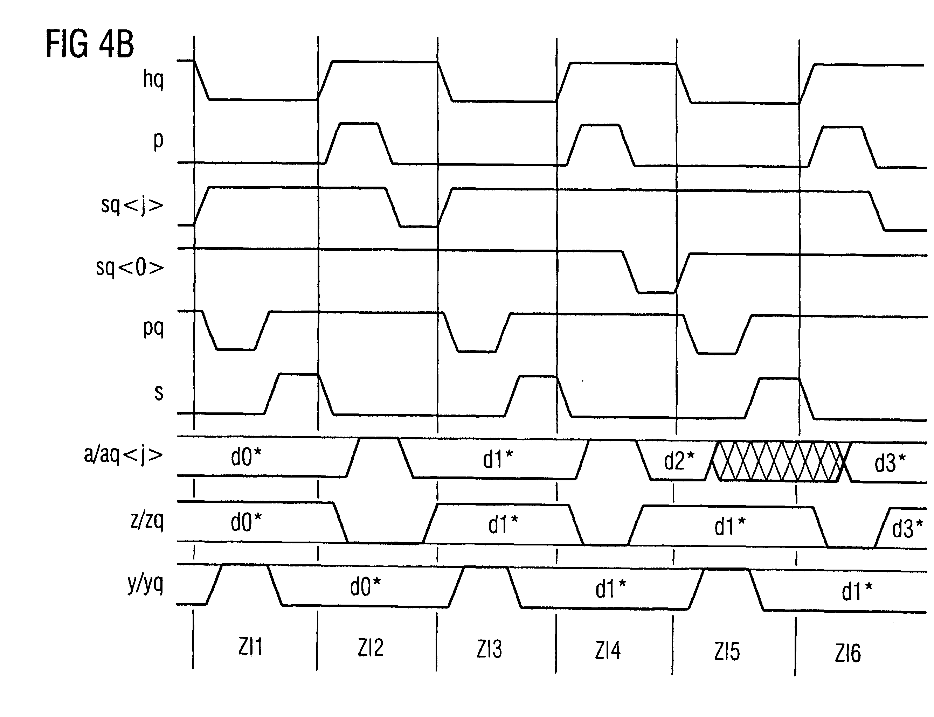

Das in Figur 4a dargestellte dritte Ausführungsbeispiel ist, verglichen mit dem ersten Ausführungsbeispiel aus Figur 2a, vollständig komplementär aufgebaut. Jede der Transistorgruppen der Figur 4a hat ihr komplementäres Gegenstück in Figur 2a. Dies hat beispielsweise zur Folge, daß die ersten Leitungen AL1, AL2 nunmehr einen Vorlade-Zustand von (0,0) aufweisen. Demgegenüber ist der Vorlade-Zustand der zweiten Leitungen ZL1, ZL2 (1,1).

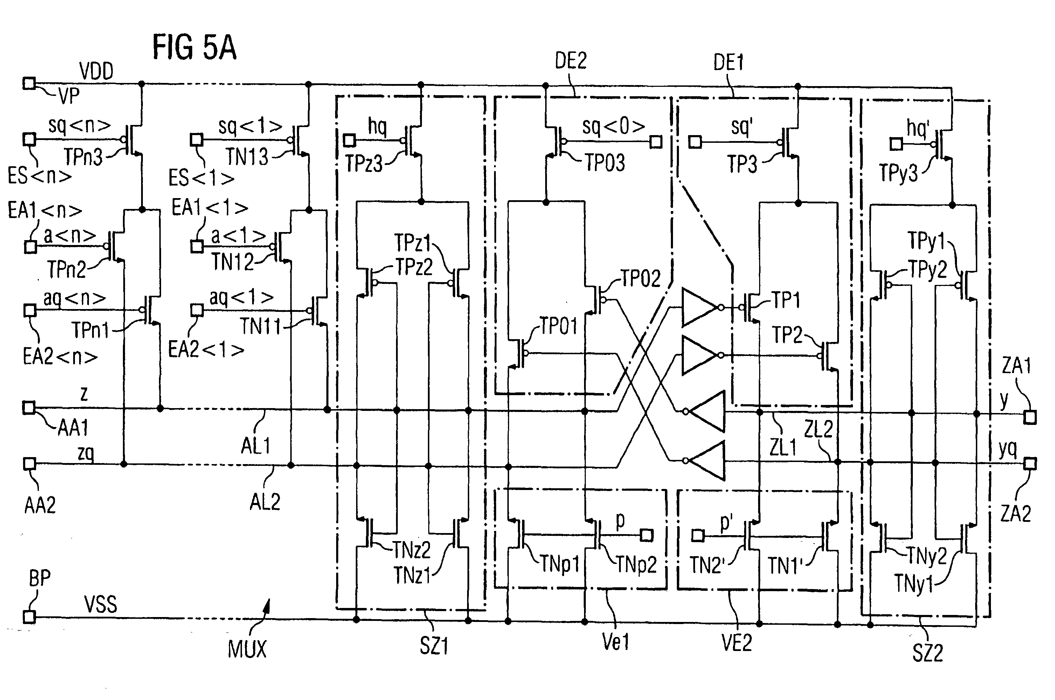

Das in Figur 5a dargestellte vierte Ausführungsbeispiel ist schließlich vollständig komplementär zu dem zweiten Ausführungsbeispiel der Figur 3a gebaut. Jede der Transistorgruppen aus Figur 5a findet ihr komplementäres Gegenstück in Figur 3a.

### Bezugszeichenliste

- VP: Versorgungspotentialanschluß
- BP: Bezugspotentialanschluß

- E: Dateneingang
- EA1<j>: Eingangsanschluß
- EA2<j>: Eingangsanschluß
- ES<j>: Steueranschluß
- a<j>: Eingangssignal
- aq<j>: Komplementäres Eingangssignal

- A: Datenausgang
- AA1: Anschluß
- AA2: Anschluß
- AL1: Leitung
- AL2: Leitung
- z: Ausgangssignal
- zq: Komplementäres Ausgangssignal

- MUX: Multiplexor
- TN11, TN12, TNn1, TNn2: Transistoren
- TN13, TNn3: (Auswahl-)Transistoren
- s<j>: Auswahlsignal

- SZ1: Speicherzelle
- TPz1, TPz2, TNz1, TNz2: Transistoren
- TNz3: (Auswahl-)Transistor
- h: Auswahlsignal

- ZA1: Anschluß
- ZA2: Anschluß
- ZL1: Leitung
- ZL2: Leitung
- y: Ausgangssignal
- yq: Komplementäres Ausgangssignal
- SZ2: Speicherzelle

- TPy1, TPy2, TNy1, TNy2: Transistoren
- TNy3: (Auswahl-)Transistor
- h: Auswahlsignal

- VE1: Vorladeeinheit
- TPp1, TPp2: Transistoren
- pq: Auswahlsignal

- VE2: Vorladeeinheit
- TNp1, TNp2: Transistoren
- p: Auswahlsignal

- DE1: Datenübertragungseinrichtung
- TP01, TP02: Transistoren
- TP03: (Auswahl-)Transistor
- sq: Auswahlsignal

- DE2: Datenübertragungseinrichtung
- TN01, TN02: Transistoren
- TN03: (Auswahl-)Transistor
- s<0>: Auswahlsignal

## Patentansprüche

1. Integrierte Schaltung mit
- zwei ersten Anschlüssen (AA1, AA2), an die ein Dual-Rail-Signal (z, zq) anlegbar ist,
- einer mit den ersten Anschlüssen (AA1, AA2) verbundenen ersten Speicherzelle (SZ1), die das an den ersten Anschlüssen (AA1, AA2) anliegende Signal (z, zq) zwischenspeichert,
- einem ersten Mittel (VE1) zum Vorladen von mit den ersten Anschlüssen (AA1, AA2) verbundenen ersten Leitungen (AL1, AL2),
- einer ersten Datenübertragungseinrichtung (DE1), die das in der ersten Speicherzelle (SZ1) gespeicherte Dual-Rail-Signal an zweite Anschlüsse (ZA1, ZA2) weitergibt, die mit einer zweiten Speicherzelle (SZ2) verbunden sind, welche dieses Signal über eine zweite Datenübertragungseinrichtung (DE2) wieder an die ersten Anschlüsse (AA1, AA2) übertragen kann und
- einem zweiten Mittel (VE2) zum Vorladen von den mit den zweiten Anschlüssen (ZA1, ZA2) verbundenen zweiten Leitungen (ZL1, ZL2).

2. Integrierte Schaltung nach Anspruch 1, bei der die erste und die zweite Speicherzelle (SZ1; SZ2) als gegeneinander geschaltete Inverter ausgeführt sind.

3. Integrierte Schaltung nach Anspruch 1 oder2, bei der die erste und die zweite Speicherzelle (SZ1; SZ2) jeweils über einen Auswahltransistor (TNz3; TPy3) mit einem Versorgungspotentialanschluß (VDD; VSS) gekoppelt sind, an dessen Steueranschlüssen jeweils ein Taktsignal (h) anliegt, wobei bei einem ersten logischen Wert des Taktsignals (h) die erste Speicherzelle (SZ1) mit einem Dual-Rail-Signal beschrieben wird, während die zweite Speicherzelle (SZ2) das in sie geschriebene Dual-Rail-Signal hält und bei einem zweiten logischen Wert des Taktsignales (h) die zweite Speicherzelle (SZ2) mit einem Dual-Rail-Signal beschrieben wird, während die erste Speicherzelle (SZ1) das in sie geschriebene Dual-Rail-Signal hält.

4. Integrierte Schaltung nach einem der vorhergehenden Ansprüche, bei der das erste Mittel (VE1) zum Vorladen (Precharge) von mit den ersten Anschlüssen (AA1, AA2) verbundenen ersten Leitungen (AL1, AL2) aus zwei Schaltelementen (TPp1, TPp2)/(TNp1, TNp2) besteht, die zwischen einer Versorgungspotentialleitung (VDD, VSS) und einer jeweiligen ersten Leitung (AA1, AA2) verschaltet sind.

5. Integrierte Schaltung nach einem der vorhergehenden Ansprüche, bei der das zweite Mittel (VE2) zum Vorladen (Precharge) von mit den zweiten Anschlüssen (ZA1, ZA2) verbundenen zweiten Leitungen (ZL1, ZL2) aus zwei Schaltelementen (TNp1, TNp2)/ (TPp1, TPp2) besteht, die zwischen einer Versorgungspotentialleitung (VDD, VSS) und einer jeweiligen zweiten Leitung (ZA1, ZA2) verschaltet sind.

6. Integrierte Schaltung nach einem der vorhergehenden Ansprüche, bei der die erste Datenübertragungseinrichtung (DE1) zwei Schaltelemente (TP01, TP02) aufweist, deren Steueranschlüsse jeweils mit einem der ersten Anschlüsse (AA1, AA2) verbunden ist und die weiterhin einen Auswahltransistor (TP03) aufweist, der zwischen einer Versorgungspotentialleitung (VDD, VSS) und einem jeweiligen Hauptanschluß der zwei Schaltelemente (TP01, TP02) verschalten ist, und wobei der jeweils andere Hauptanschluß der zwei Schaltelemente (TP01, TP02) mit einem der zweiten Anschlüsse (ZA1, ZA2) verbunden ist.

7. Integrierte Schaltung nach einem der vorhergehenden Ansprüche, bei der die zweite Datenübertragungseinrichtung (DE2) zwei Schaltelemente (TN01, TN02) aufweist, deren Steueranschlüsse jeweils mit einem der zweiten Anschlüsse (ZA1, ZA2) verbunden ist und die weiterhin einen Auswahltransistor (TN03) aufweist, der zwischen einer Versorgungspotentialleitung (VDD, VSS) und einem jeweiligen Hauptanschluß der zwei Schaltelemente (TP01, TP02) verschaltet ist, und wobei der jeweils andere Hauptanschluß der zwei Schaltelemente (TN01, TN02) mit einem der ersten Anschlüsse (AA1, AA2) verbunden ist.

8. Integrierte Schaltung nach einem der vorhergehenden Ansprüche, bei der die ersten Anschlüsse (AA1, AA2) einen Datenausgang (A) bildende Ausgangsanschlüsse sind, die über eine Schaltungsanordnung (TNj1, TNj2, TNj3; wobei j=1...n) mit einem zumindest zwei Eingangsanschlüsse (EA1, EA2) umfassenden Dateneingang (E), an den ein Dual-Rail-Signal anlegbar ist, verbunden sind, wobei die Schaltungsanordnung (TNj1, TNj2, TNj3; wobei j=l...n) in Abhängigkeit eines Auswahlsignales (s<j>, wobei j=l...n) das an den Eingangsanschlüssen (EA1, EA2) anliegende Dual-Rail-Signal an die Ausgangsanschlüsse (AA1, AA2) gibt.

9. Integrierte Schaltung nach Anspruch 8, bei der der Dateneingang als Multiplexor ausgeführt ist.

10. Verfahren zum Betreiben einer integrierten Schaltung nach einem der vorhergehenden Ansprüche, bei dem
- die Auswahltransistoren (TNz3, Tpy3) der ersten und zweiten Speicherzelle (SZ1, SZ2) mit einem Taktsignal (h) beaufschlagt werden,
- das erste Mittel (VE1) zum Vorladen der ersten Leitungen (AA1, AA2) in Folge einer fallenden Taktflanke aktiviert wird,
- das zweite Mittel (VE2) zum Vorladen der zweiten Leitungen (Zl1, ZL2) in Folge einer steigenden Taktflanke aktiviert wird,
- die erste Datenübertragungseinheit (DE1) nach der Deaktivierung des zweiten Mittels (VE2) zum Vorladen der zweiten Leitungen (ZL1, ZL2) aktiviert wird, wodurch das an den ersten Anschlüssen (AA1, AA2) anliegende Dual-Rail-Signal an die zweite Speicherzelle übertragen wird,
- die zweite Datenübertragungseinheit (DE2) aktiviert wird, wenn das in der zweiten Speicherzelle (SZ2) gespeicherte Dual-Rail-Signal an den ersten Ausgangsanschlüssen zur Verfügung stehen soll.

11. Verfahren nach Anspruch 10, bei dem die Aktivierung des ersten und zweiten Mittels (VE1, VE2) durch Ansteuern der jeweiligen Schaltelemente (TPp1, TPp2; TNpl, TNp2) erfolgt.

12. Verfahren nach Anspruch 11, bei dem die Aktivierung der ersten und zweiten Datenübertragungseinheiten (DE1, DE2) durch Ansteuern eines jeweiligen Auswahltransistors (TP03, TN03) erfolgt.

13. Verfahren nach einem der Ansprüche 10 bis 12, bei dem das Ansteuern der Schaltelemente und Auswahltransistoren mittels einer Steuerschaltung erfolgt.

## Claims

1. Integrated circuit having
- two first connections (AA1, AA2) to which a dual-rail signal (z, zq) can be applied,
- a first memory cell (SZ1), which is connected to the first connections (AA1, AA2) and buffer-stores the signal (z, zq) applied to the first connections (AA1, AA2),
- a first means (VE1) for precharging first lines (AL1, AL2), which are connected to the first connections (AA1, AA2),
- a first data transmission device (DE1), which forwards the dual-rail signal stored in the first memory cell (SZ1) to second connections (ZA1, ZA2), which are connected to a second memory cell (SZ2) which is able to transmit this signal to the first connections (AA1, AA2) again using a second data transmission device (DE2), and
- a second means (VE2) for precharging the second lines (ZL1, ZL2), which are connected to the second connections (ZA1, ZA2).

2. Integrated circuit according to Claim 1, in which the first and second memory cells (SZ1; SZ2) are in the form of back-to-back connected inverters.

3. Integrated circuit according to Claim 1 or 2, in which the first and second memory cells (SZ1; SZ2) are coupled via a respective selection transistor (TNz3; TPy3) to a supply potential connection (VDD; VSS) whose control connections have a respective clock signal (h) applied to them, where a first logic value for the clock signal (h) involves the first memory cell (SZ1) having a dual-rail signal written to it while the second memory cell (SZ2) holds the dual-rail signal written to it, and a second logic value for the clock signal (h) involves the second memory cell (SZ2) having a dual-rail signal written to it while the first memory cell (SZ1) holds the dual-rail signal written to it.

4. Integrated circuit according to one of the preceding claims, in which the first means (VE1) for precharging first lines (AL1, AL2), which are connected to the first connections (AA1, AA2), comprises two switching elements (TPp1, TPp2)/(TNp1, TNp2) which are connected between a supply potential line (VDD, VSS) and a respective first line (AA1, AA2).

5. Integrated circuit according to one of the preceding claims, in which the second means (VE2) for precharging second lines (ZL1, ZL2), which are connected to the second connections (ZA1, ZA2), comprises two switching elements (TNpl, TNp2)/(TPp1, TPp2) which are connected between a supply potential line (VDD, VSS) and a respective second line (ZA1, ZA2).

6. Integrated circuit according to one of the preceding claims, in which the first data transmission device (DE1) has two switching elements (TP01, TP02) whose control connections are respectively connected to one of the first connections (AA1, AA2), and which also has a selection transistor (TP03) which is connected between a supply potential line (VDD, VSS) and one respective main connection on the two switching elements (TP01, TP02), and where the respective other main connection on the two switching elements (TP01, TP02) is connected to one of the second connections (ZA1, ZA2).

7. Integrated circuit according to one of the preceding claims, in which the second data transmission device (DE2) has two switching elements (TN01, TN02) whose control connections are respectively connected to one of the second connections (ZA1, ZA2), and which also has a selection transistor (TN03) which is connected between a supply potential line (VDD, VSS) and one respective main connection on the two switching elements (TP01, TP02), and where the respective other main connection on the two switching elements (TN01, TN02) is connected to one of the first connections (AA1, AA2).

8. Integrated circuit according to one of the preceding claims, in which the first connections (AA1, AA2) are output connections which form a data output (A) and are connected via a circuit arrangement (TNj1, TNj2, TNj3; where j=1...n) to a data input (E) which comprises at least two input connections (EA1, EA2) and to which a dual-rail signal can be applied, where the circuit arrangement (TNj1, TNj2, TNj3; where j=1...n) passes the dual-rail signal applied to the input connections (EA1, EA2) to the output connections (AA1, AA2) on the basis of a selection signal (s<j>, where j=1...n).

9. Integrated circuit according to Claim 8, in which the data input is in the form of a multiplexer.

10. Method for operating an integrated circuit according to one of the preceding claims, in which
- the selection transistors (TNz3, TPy3) for the first and second memory cells (SZ1, SZ2) have a clock signal (h) applied to them,
- the first means (VE1) for precharging the first lines (AA1, AA2) is activated as a result of a falling clock edge,
- the second means (VE2) for precharging the second lines (ZL1, ZL2) is activated as a result of a rising clock edge,
- the first data transmission unit (DE1) is activated following deactivation of the second means (VE2) for precharging the second lines (ZL1, ZL2), as a result of which the dual-rail signal applied to the first connections (AA1, AA2) is transmitted to the second memory cell,
- the second data transmission unit (DE2) is activated if the dual-rail signal stored in the second memory cell (SZ2) needs to be available on the first output connections.

11. Method according to Claim 10, in which the first and second means (VE1, VE2) are activated by actuating the respective switching elements (TPp1, TPp2; TNp1, TNp2).

12. Method according to Claim 11, in which the first and second data transmission units (DE1, DE2) are activated by actuating a respective selection transistor (TP03, TN03).

13. Method according to one of Claims 10 to 12, in which the switching elements and selection transistors are actuated using a control circuit.

## Revendications

1. Circuit intégré comprenant
- deux premières bornes (AA1, AA2), auxquelles peut être appliqué un signal (z, zq) dual-rail ;
- une première cellule (SZ1) de mémoire qui est reliée aux premières bornes (AA1, AA2) et qui mémorise intermédiairement le signal (z, zq) s'appliquant aux premières bornes (AA1, AA2) ;
- un premier moyen (VE1) de préchargement de premières lignes (AL1, AL2) relié aux premières bornes (AA1, AA2) ;
- un premier dispositif (DE1) de transmission de données qui retransmet le signal dual-rail mémorisé dans la première cellule (SZ1) de mémoire à deux bornes (ZA1, ZA2) reliées à une deuxième cellule (SZ2) de mémoire qui peut retransmettre ce signal par l'intermédiaire d'un deuxième dispositif (DE2) de transmission de données aux premières bornes (AA1, AA2) ; et
- un deuxième moyen (VE2) de préchargement des deuxièmes lignes (ZL1, ZL2) reliées aux deuxièmes bornes (ZA1, ZA2).

2. Circuit intégré suivant la revendication 1, dans lequel la première et la deuxième cellules (SZ1, SZ2) de mémoire sont réalisées sous la forme d'inverseurs montés en sens opposé.

3. Circuit intégré suivant la revendication 1 ou 2, dans lequel la première et deuxième cellules (SZ1, SZ2) de mémoire sont couplées, respectivement, par un transistor (TNz3, TPy3) de sélection ayant une borne (VDD, VSS) de potentiel d'alimentation aux bornes de commande duquel s'applique un signal (h) d'horloge dans lequel, pour une première valeur logique du signal (h) d'horloge, un signal dual-rail est écrit dans la première cellule (SZ1) de mémoire, tandis que la deuxième cellule (SZ2) de mémoire maintient le signal dual-rail qui y est écrit et pour une deuxième valeur logique du signal (h) d'horloge un signal dual-rail est écrit dans la deuxième cellule (SZ2) de mémoire, tandis que la première cellule (SZ1) de mémoire maintient le signal dual-rail qui y est écrit.

4. Circuit intégré suivant l'une des revendications précédentes, dans lequel le premier moyen (VE1) de préchargement (précharge) de premières lignes (AL1, AL2) relié aux premières bornes (AA1, AA2) est constitué de deux éléments (TPp1, TPp2)/(TNp1, TNp2) de commutation qui sont montés entre une ligne (VDD, VSS) de potentiel d'alimentation et une première ligne (AA1, AA2) respective.

5. Circuit intégré suivant l'une des revendications précédentes, dans lequel le deuxième moyen (VE2) de préchargement (précharge) de deuxièmes lignes (ZL1, ZL2) relié aux deuxièmes bornes (ZA1, ZA2) est constitué de deux éléments (TNp1, TNp2)/(TPp1, TPp2) de commutation qui sont montés entre une ligne (VDD, VSS) de potentiel d'alimentation et une deuxième ligne (ZA1, ZA2) respective.

6. Circuit intégré suivant l'une des revendications précédentes, dans lequel le premier dispositif (DE1) de transmission de données a deux éléments (TP01, TP02) de commutation dont les bornes de commande sont reliées, respectivement, à l'une des premières bornes (AA1, AA2) et il a, en outre, un transistor (TP03) de sélection qui est monté entre une ligne (VDD, VSS) de potentiel d'alimentation et une borne principale respective des deux éléments (TP01, TP02) de commutation et dans lequel la, respectivement, autre borne principale des deux éléments (TP01, TP02) de commutation est reliée à l'une des deux bornes (ZA1, ZA2).

7. Circuit intégré suivant l'une des revendications précédentes, dans lequel le deuxième dispositif (DE2) de transmission de données a deux éléments (TN01, TN02) de commutation, dont les bornes de commande sont reliées, respectivement, à l'une des deuxièmes bornes (ZA1, ZA2) et il a, en outre, un transistor (TN03) de sélection qui est monté entre une ligne (VDD, VSS) de potentiel d'alimentation et une borne principale respective des deux éléments (TP01, TP02) de commutation et dans lequel la, respectivement, autre borne principale des deux éléments (TN01, TN02) de commutation est reliée à l'une des deux bornes (ZA1, ZA2).

8. Circuit imprimé suivant l'une des revendications précédentes, dans lequel les premières bornes (AA1, AA2) sont des bornes de sortie qui forment une sortie (A) pour les données et qui sont reliées par un montage (TNj1, TNj2, TNj3, avec j = 1...n) à une entrée (E) pour des données qui comprend au moins deux bornes (EA1, EA2) d'entrée et à laquelle peut être appliqué un signal dual-rail, le montage (TNj1, TNj2, TNj3, avec j = 1...n) donnant, en fonction d'un signal (s<j>, avec j = 1...n) de sélection, le signal dual-rail s'appliquant aux bornes (EA1, EA2) d'entrée aux bornes (AA1, AA2) de sortie.

9. Circuit intégré suivant la revendication 8, dans lequel l'entrée pour les données est réalisée en multiplexeur.

10. Procédé pour faire fonctionner un circuit intégré suivant l'une des revendications précédentes, dans lequel
- on alimente les transistors (TNz1, TPy3) de sélection des première et deuxième cellules (SZ1, SZ2) de mémoire en un premier signal (h) d'horloge ;
- on active le premier moyen (VE1) de préchargement des premières lignes (AA1, AA2) à la suite d'un front d'horloge descendant ;
- on active le deuxième moyen (VE2) de préchargement des deuxièmes lignes (ZL1, ZL2) à la suite d'un front d'horloge montant ;
- on active la première unité (DE1) de transmission de données après la désactivation du deuxième moyen (VE2) pour le préchargement des deuxièmes lignes (ZL1, ZL2) grâce à quoi le signal dual-rail s'appliquant aux premières bornes (AA1, AA2) est transmis à la deuxième cellule de mémoire ;
- on active la deuxième unité (DE2) de transmission de données si le signal dual-rail mémorisé dans la deuxième cellule (SZ2) de mémoire doit être mis à disposition sur les premières bornes de sortie.

11. Procédé suivant la revendication 10, dans lequel on effectue l'activation du premier et du deuxième moyen (VE1, VE2) en commandant les éléments (TPp1, TPp2, TNp1, TNp2) respectifs de commutation.

12. Procédé suivant la revendication 11, dans lequel on effectue l'activation des première et deuxième unités (DE1, DE2) de transmission de données en commandant un transistor (TP03, TN03) respectifs de sélection.

13. Procédé suivant l'une des revendications 10 à 12, dans lequel on effectue la commande des éléments de commutation et des transistors de sélection au moyen d'un circuit de commande.
